# EUROPEAN PATENT APPLICATION

(11) **EP 4 843 688 A1**
(43) Date of publication of application: **25.11.2026**
(21) Application number: 25741984.6
(22) Date of filing: 16.01.2025
(51) Int. Cl.: B22F 1/17, B22F 1/00, B22F 1/16, B82Y 30/00

(54) **COPPER PARTICLES COATED WITH SLIGHTLY OXIDIZED COPPER, MATERIAL FOR SINTERING CONTAINING SAME, SINTERED BODY USING SAID MATERIAL FOR SINTERING, AND JOINED BODY**

(30) Priority: 18.01.2024 JP 2024006167
(71) Applicant: National University Corporation Hokkaido University, Hokkaido 060-0808 (JP)
(72) Inventor: YONEZAWA, Tetsu, Sapporo-shi, Hokkaido 060-0808 (JP); TSUKAMOTO, Hiroki, Sapporo-shi, Hokkaido 060-0808 (JP)
(74) Representative: J A Kemp LLP
(86) International application number: PCT/JP2025/001158
(87) International publication number: WO 2025/154759

(57) **Abstract**

Slightly oxidized copper-coated copper particles each including a core copper particle and a shell containing slightly oxidized copper consisting of one or both of Cu₆₄O and Cu₈O,
in which, in a scanning electron microscope image of the core copper particles, when a maximum length of each particle is defined as a major axis length, an arithmetic average value of the major axis length is more than 1 µm, and
in which, in the scanning electron microscope image, for particles having a ratio of an arithmetic average length of portions orthogonal to the major axis length to the major axis length of 0.4 or less, when the arithmetic average length is defined as a thickness, an arithmetic average value of ratios of the thickness to the major axis length is 0.25 or less.

## Description

### TECHNICAL FIELD

The present disclosure relates to slightly oxidized copper-coated copper particles, a material for sintering containing the same, and a sintered body and a bonded body obtained using the material for sintering.

### BACKGROUND ART

In recent years, in the manufacture of printed circuit boards, as a clean technique that requires neither exposure to light nor etching, which have been conventionally used, and that does not emit harmful chemical substances, a technique called printable electronics that directly forms fine wiring by inkjet or printing has attracted attention. Solder has been used for bonding between members such as bonding between a substrate and a component or bonding between circuits in semiconductor devices. For power semiconductors, LSIs, and the like, which are operated at a high temperature of 150°C or higher, high melting point lead solder has been used for bonding as a bonding material. On the other hand, in recent years, with the advent of silicon carbide (SiC)-based power semiconductors, the operating temperature of semiconductors has increased to 250 to 300°C, which is close to the melting point of high melting point lead solder, and securing of connection reliability and heat dissipation design have become major problems. In addition, with the tightening of RoHS regulations, a bonding material free of lead is required. As a bonding material free of lead, a technique of subjecting silver nanoparticles to low-temperature sintering to form a sintered silver layer has been proposed, for example.

As a bonding material containing silver, a silver fine particle composition capable of attaining high bonding strength at a low bonding temperature is proposed in Patent Document 1. However, silver fine particles are expensive and there is a concern about the influence of a wiring short circuit due to ion migration. As a substitute for silver fine particles, copper fine particles, which are inexpensive and have high resistance to ion migration, have attracted attention, but copper fine particles have a problem that the copper fine particles hardly sinter at a low temperature.

To solve the above problems, the present inventors have attempted to obtain low-temperature sintering particles using oxides of copper. As oxides of copper, five types including CuO, Cu₂O, Cu₄O₃, Cu₈O, and Cu₆₄O are known. Among them, Cu₆₄O and Cu₈O have a smaller proportion of oxygen atoms than CuO and Cu₂O, which are stable phases, have low stability, and can be reduced to metal copper with low energy. Therefore, it is conceivable to realize low-temperature sintering at 250°C or lower by using Cu₆₄O and/or Cu₈O. In the present description, Cu₆₄O and Cu₈O, which have a smaller proportion of oxygen atoms, are particularly referred to as "slightly oxidized copper", and are distinguished from other oxides, namely, CuO, Cu₂O, and Cu₄O₃.

For example, Patent Document 2 discloses oxide-containing copper fine particles including Cu₆₄O and optionally Cu₂O, and coated with a carboxylic acid, in which a mass ratio of Cu₆₄O to a total mass of Cu, Cu₆₄O and Cu₂O is 0.5 to 2.0% by mass.

In recent years, electrical components are required to have further superior electrical conductivity, and not only the submicron oxide-containing copper fine particles having surface necking characteristics improved by a carboxylic acid film described in Patent Document 2, but also the nano-sized conductive material technologies utilizing Melting-point depression disclosed in the following Patent Documents 3 and 4 are cited. Patent Document 3 discloses a copper oxide particle composition comprising at least one of Cu₆₄O particles and Cu₈O particles, in which at least one of the Cu₆₄O particles and the Cu₈O particles has an average particle size of 20 nm or less. Patent Document 4 discloses mixed particles comprising copper clusters having an average particle size of 0.1 nm or more and 1 nm or less and copper oxide particles having an average particle size of more than 1 nm and 20 nm or less, in which the copper oxide particles are at least one of Cu₆₄O particles and the Cu₈O particles, or mixed particles comprising copper clusters having an average particle size of 0.1 nm or more and 1 nm or less, copper oxide particles having an average particle size of more than 1 nm and 20 nm or less, and metal copper particles having an average particle size of more than 20 nm and 1 µm or less, in which the copper oxide particles are at least one of Cu₆₄O particles and the Cu₈O particles.

### CONVENTIONAL ART DOCUMENTS

### PATENT DOCUMENTS

Patent Document 1: WO 2016/166948 A
Patent Document 2: WO 2022/045252 A
Patent Document 3: JP 2020-29392 A
Patent Document 4: JP 2020-100893 A

### SUMMARY OF THE INVENTION

### PROBLEMS TO BE SOLVED BY THE INVENTION

In all of Patent Documents 2 to 4, the disclosed particle size of the copper fine particles is relatively small (for example, 1 µm or less). Submicron or smaller fine particles have a strong cohesive force, and it is necessary to specially provide a manufacturing step for pulverizing and refining the aggregated particles during processing (adjustment) into a coating paste. In addition, since the submicron or smaller fine particles can be easily oxidized, it is also necessary to take care to suppress the oxidation in the manufacturing process. Furthermore, there is also a problem that the adjustment of the manufacturing process results in an increased manufacturing cost.

The present disclosure has been made in view of the above circumstances, and an object of the present disclosure is to provide slightly oxidized copper-containing particles capable of being sufficiently sintered even at a low temperature while setting the particle size to be large (for example, setting the major axis length to more than 1 µm), and a material for sintering containing the slightly oxidized copper-containing particles.

### MEANS FOR SOLVING THE PROBLEMS

Aspect 1 of the present invention provides
slightly oxidized copper-coated copper particles each including a core copper particle and a shell containing slightly oxidized copper consisting of one or both of Cu₆₄O and Cu₈O,
wherein, in a scanning electron microscope image of the core copper particles, when a maximum length of each particle is defined as a major axis length, an arithmetic average value of the major axis length is more than 1 µm, and
wherein, in the scanning electron microscope image, for particles having a ratio of an arithmetic average length of portions orthogonal to the major axis length to the major axis length of 0.4 or less, when the arithmetic average length is defined as a thickness, an arithmetic average value of ratios of the thickness to the major axis length is 0.25 or less.

Aspect 2 of the present invention provides
the slightly oxidized copper-coated copper particles according to aspect 1, wherein the slightly oxidized copper is in the form of slightly oxidized copper particles having an arithmetic average value of circle-equivalent diameters of more than 1 nm and 20 nm or less.

Aspect 3 of the present invention provides
the slightly oxidized copper-coated copper particles according to aspect 1 or 2, wherein in the scanning electron microscope image of the core copper particles, an arithmetic average value of fractal dimensions of particle surface roughness is 1.00 to 1.05.

Aspect 4 of the present invention provides
a material for sintering including the slightly oxidized copper-coated copper particles according to any one of aspects 1 to 3.

Aspect 5 of the present invention provides
the material for sintering according to aspect 4, wherein the material for sintering is a paste.

Aspect 6 of the present invention provides
a sintered body obtained by sintering the material for sintering according to aspect 4 or 5.

Aspect 7 of the present invention provides
a bonded body obtained by bonding a plurality of materials with the material for sintering according to aspect 4 or 5.

### TECHNICAL EFFECTS OF THE INVENTION

According to the present disclosure, it is possible to provide slightly oxidized copper-containing particles capable of being sufficiently sintered even at a low temperature while setting the particle size to be large (for example, setting the major axis length to more than 1 µm), and a material for sintering containing the slightly oxidized copper-containing particles.

### BRIEF DESCRIPTION OF THE DRAWINGS

[Fig. 1] Fig. 1 is a scanning electron microscope (SEM) image of raw material copper particles.
[Fig. 2] Fig. 2 is an SEM image of raw material copper particles after processing (flattening treatment).
[Fig. 3] Fig. 3 is an enlarged SEM image of raw material copper particles after processing (flattening treatment).
[Fig. 4] Fig. 4 shows XRD patterns of the raw material copper particles (before processing (raw material) and after processing (flattened)), Levels 1 and 2 (after oxidation and after reaction (after synthesis)) of Example.
[Fig. 5] Fig. 5 is a TEM image of the particles of Condition 2 of Example.
[Fig. 6] Fig. 6 is an enlarged TEM image of the particles of Condition 2 of Example.
[Fig. 7] Fig. 7 is a TG-DTA measurement result of Condition 1 of Example.
[Fig. 8] Fig. 8 is a TG-DTA measurement result of Condition 2 of Example.
[Fig. 9] Fig. 9 shows XRD patterns of the raw material copper particles (raw material) and the spherical particles after reaction (after synthesis) in Comparative Example.
[Fig. 10] Fig. 10 is a TEM image of the spherical particles of Comparative Example.
[Fig. 11] Fig. 11 is a TG-DTA measurement result of the spherical particles of Comparative Example.
[Fig. 12] Fig. 12 is a diagram showing a procedure of the preparation of a sample for bonding/sintering evaluation.
[Fig. 13A] Fig. 13A is a schematic view of a copper test piece used for the preparation of a sample for bonding/sintering evaluation.
[Fig. 13B] Fig. 13B is a schematic view of a metal mask used for the preparation of a sample for bonding/sintering evaluation.
[Fig. 13C] Fig. 13C is a schematic view illustrating hot pressing in a bonding/sintering evaluation test.
[Fig. 13D] Fig. 13D is a schematic sectional view illustrating the method of the bonding/sintering evaluation test.
[Fig. 14] Fig. 14 is a diagram showing the results of the bonding/sintering evaluation test.
[Fig. 15] Fig. 15 is an SEM image of a fracture surface of Condition 1 of Example observed after the bonding/sintering evaluation test.
[Fig. 16] Fig. 16 is an SEM image of a cross section after the bonding/sintering evaluation test of Condition 1 of Example.
[Fig. 17] Fig. 17 is an SEM image of a fracture surface of the spherical particles of Comparative Example observed after the bonding/sintering evaluation test.

### MODE FOR CARRYING OUT THE INVENTION

The present inventors studied intensively to realize slightly oxidized copper-containing particles capable of being sufficiently sintered even at a low temperature while setting the particle size of core copper particles to be large (for example, setting the major axis length to more than 1 µm). As a result of the studies by the present inventors, when conventional spherical copper particles are used as core copper particles, adjoining core copper particles are sintered together at points, and thus when the particle size of core copper particles is simply increased to the micron level, the number of sintered contact points per unit volume decreases, and voids associated with gaps between particles are also enlarged, so that a problem that a sintered body with a brittle structure is formed has occurred. It has been found that when such particles are used for bonding applications, sufficient bonding strength is not obtained. The present inventors further studied and, as a result, it has been revealed that the following slightly oxidized copper-coated copper particles are useful as a material for sintering, namely, slightly oxidized copper-coated copper particles each comprising a core copper particle and a shell containing slightly oxidized copper consisting of one or both of Cu₆₄O and Cu₈O, in which, in a scanning electron microscope (SEM) image of the core copper particles, when a maximum length of each particle is defined as a major axis length and an arithmetic average length of portions orthogonal to the major axis length is defined as a minor axis length, the major axis length is set to more than 1 µm; and in which, in the SEM image, for particles having a ratio of the minor axis length to the major axis length of 0.4 or less, the minor axis length is defined as a thickness, an arithmetic average value of ratios of the thickness to the major axis length (hereinafter, the ratios are also referred to as "first aspect ratios" and the arithmetic average value is also referred to as "average first aspect ratio") is set to a prescribed value or less. In the case of having used such slightly oxidized copper-coated copper particles as a material for sintering, due to the fact that sintering is dramatically promoted by a reduction reaction accompanying change of the crystal structure of the shell containing slightly oxidized copper and the core copper particles have a small average first aspect ratio, for example, when the material for sintering is applied to a substrate or the like, the core copper particles are likely to be oriented with the major axis thereof being almost parallel to the surface of the substrate or the like (and the thickness direction being almost orthogonal to the surface of the substrate or the like), and the core copper particles are layered with no (less) gaps and voids tend to be suppressed even when the core copper particles are large in particle size. It is conceived that due to such facts and the like, a bonded body having sufficient bonding strength was able to be obtained.

Hereinafter, the requirements of the present embodiments are described in detail.

The slightly oxidized copper-coated copper particles of the present embodiments each include a core copper particle and a shell containing slightly oxidized copper consisting of one or both of Cu₆₄O and Cu₈O, in which, in a scanning electron microscope (SEM) image of the core copper particles, when a maximum length of each particle is defined as a major axis length and an arithmetic average length of portions orthogonal to the major axis length is defined as a minor axis length, the major axis length is set to more than 1 µm; and in which, in the SEM image, for particles having a ratio of the minor axis length to the major axis length of 0.4 or less, the minor axis length is defined as a thickness, an arithmetic average value of ratios of the thickness to the major axis length is 0.25 or less. This makes it possible to obtain a material for sintering having sufficient bonding strength while setting the particle size of copper fine particles to be large (for example, setting the major axis length to more than 1 µm).

The chemical composition of the copper particle constituting the core is just required to contain copper as a main component, and for example, the copper content may be 80% by mass or more, 90% by mass or more, or 95% by mass or more. The chemical composition is preferably consisting of copper and inevitable impurity elements. This makes it possible to improve the conductivity of a sintered body. The total amount of the inevitable impurity elements may be, for example, 1.0% by mass or less. The size and the shape of the copper particle constituting the core are not particularly limited as long as the requirements of the present embodiments are satisfied.

Regarding the shell containing slightly oxidized copper consisting of one or both of Cu₆₄O and Cu₈O, for example, with a mixture of slightly oxidized copper particles consisting of at least one of Cu₆₄O particles and Cu₈O particles, metal copper particles, and a copper cluster as in conventional technologies, it was difficult to disperse these particles uniformly. In particular, when the slightly oxidized copper particles were fine particles having an average particle size of 20 nm or less, the fine particles were likely to aggregate and were difficult to disperse. In contrast, the slightly oxidized copper-coated copper particles according to the present embodiments have a structure (core-shell structure) in which slightly oxidized copper consisting of one or both of Cu₆₄O and Cu₈O adheres to the surface of a core metal copper particle, for example, as a film in the form of a shell, whereby the problem of dispersion described above is solved, and Cu₆₄O and the like on the particle surface are easily reduced during sintering, and sintering between particles is promoted.

The form of the slightly oxidized copper consisting of one or both of Cu₆₄O and Cu₈O forming the shell may be a film or a plurality of particles. The thickness of the shell (the thickness of a film or the thickness of a plurality of particles) may be, for example, more than 1 nm and 20 nm or less. The shell containing slightly oxidized copper consisting of one or both of Cu₆₄O and Cu₈O is reduced to copper by sintering, but the crystallinity thereof is not as high as that of the core copper particle, and therefore, if the shell is excessively thick, there is a concern about deterioration of mechanical strength and electrical conductivity. From these points of view, the thickness of the shell is preferably set to 20 nm or less as described above.

The slightly oxidized copper is preferably a plurality of particles, and thanks to this configuration, the slightly oxidized copper can have a certain degree of fluidity during sintering and easily fills voids, and, as a result, is more easily sintered at a low temperature. The plurality of particles may be arranged in such a manner that a single particle is disposed in the thickness direction, or alternatively, two or more particles are disposed in the thickness direction. When the slightly oxidized copper is a plurality of particles, the arithmetic average value of the circle-equivalent diameters of the particles (primary particles) (this arithmetic average value is hereinafter also referred to as "average particle size") may be, for example, more than 1 nm and 20 nm or less, and preferably more than 1 nm and 10 nm or less. The average particle size is obtained, for example, by acquiring a TEM image of slightly oxidized copper-coated copper particles, randomly selecting at least 50 or more particles in the TEM image and determining circle-equivalent diameters thereof, and calculating the arithmetic average value of the circle-equivalent diameters.

When the slightly oxidized copper is a plurality of particles, one or more selected from the group consisting of Cu₈O and Cu₆₄O preferably has a crystallite size measured by a Scherrer method of more than 1 nm and 20 nm or less, and more preferably more than 1 nm and 10 nm or less. For each of Cu₈O and Cu₆₄O, the crystallite size measured by the Scherrer method is more preferably more than 1 nm and 20 nm or less, and still more preferably more than 1 nm and 10 nm or less. The XRD pattern in the measurement by the Scherrer method is acquired by a powder X-ray diffraction method (X-ray source: CuKα ray).

In the shell, in addition to the slightly oxidized copper consisting of one or both of Cu₆₄O and Cu₈O, copper oxides such as CuO and Cu₂O used as raw materials, for example, are allowed to be contained in a trace amount at a level at which neither sinterability nor electrical conductivity is disturbed. Preferably, copper oxides used as raw materials such as CuO and Cu₂O are not contained. The shell is preferably formed of slightly oxidized copper consisting of one or both of Cu₆₄O and Cu₈O, and more preferably formed of slightly oxidized copper consisting of Cu₆₄O or consisting of Cu₆₄O and Cu₈O.

In the slightly oxidized copper-coated copper particle according to the present embodiments, in which in an SEM image of the core copper particles, when the maximum length of each particle is defined as a major axis length, the arithmetic average value of the major axis length is more than 1 µm. When the above requirement is satisfied, the necessity of a step of pulverizing and refining aggregated particles during processing into a coating paste is eliminated, so that the manufacturing cost can be reduced. The upper limit of the arithmetic average value of the major axis length is not particularly limited, but may be, for example, 50 µm or less. The arithmetic average value of the major axis length is obtained, for example, by acquiring an SEM image of slightly oxidized copper-coated copper particles, randomly selecting 10 or more particles from the SEM image, determining the major axis lengths thereof, and calculating the arithmetic average value thereof. The SEM image is a secondary electron image (SEI), for example, and is acquired under the imaging conditions specified by an acceleration voltage of 15 kV and a magnification of 5000 times, though the observation conditions are not limited as long as the shape of the core copper particles can be clearly confirmed.

As a method for measuring the major axis length of a core copper particles from slightly oxidized copper-coated copper particle, the major axis length of a core copper particle may be measured directly from an SEM image, or may be determined by measuring the maximum length of slightly oxidized copper-coated copper particle from an SEM image, and subtracting the thickness of the shell of the slightly oxidized copper (the thickness of a film or the thickness of a plurality of particles) measured by TEM or the like, from the value of the maximum length measured.

In the slightly oxidized copper-coated copper particles according to the present embodiments, in which, in an SEM image, when the maximum length of each core copper particle is defined as a major axis length and an arithmetic average length of portions orthogonal to the major axis length is defined as a minor axis length, and for particles having a ratio of the minor axis length to the major axis length of 0.4 or less, the minor axis length is defined as a thickness, the arithmetic average value of the thickness to the major axis length (the ratios are referred to as first aspect ratios, and the arithmetic average value is referred to as average first aspect ratio) is 0.25 or less. Thanks to this configuration, when this material for sintering is applied to a substrate or the like, the core copper particles are likely to be oriented with the major axis thereof being almost parallel to the surface of the substrate or the like (and the thickness direction being almost orthogonal to the surface of the substrate or the like), and even when large core copper particles having an arithmetic average value of the major axis lengths being more than 1 µm are used, the slightly oxidized copper-coated copper particles are laminated without gaps, so that a sintered surface between particles can be enlarged, and voids tend to be suppressed. As a result, a bonded body having sufficient bonding strength is able to be obtained. The arithmetic average length (that is, the minor axis length) of the portions orthogonal to the major axis length is obtained by randomly selecting three or more portions orthogonal to the major axis length from the SEM image and calculating the arithmetic average length. The lower limit of the average first aspect ratio is not particularly limited, but may be, for example, 0.01 or more, 0.05 or more, or 0.10 or more. The average first aspect ratio is obtained, for example, by acquiring an SEM image of slightly oxidized copper-coated copper particles, randomly selecting 10 or more particles from the SEM image, determining the major axis length and the thickness, and calculating the first aspect ratio (thickness/major axis length) and the arithmetic average value thereof. The SEM image is a secondary electron image (SEI), for example, and is acquired under the imaging conditions specified by an acceleration voltage of 15 kV and a magnification of 5000 times, though the observation conditions are not limited as long as the shape of the core copper particles can be clearly confirmed.

In the slightly oxidized copper-coated copper particles according to the present embodiments, in which, in an SEM image, when the maximum length of each particle is defined as a major axis length and the arithmetic average length of portions orthogonal thereto is defined as a minor axis length, the average of the ratios of the minor axis length to the major axis length (hereinafter, the ratios are also referred to as "second aspect ratios" and the average is also referred to as "average second aspect ratio") is preferably 0.40 or more, but it is not necessary to be particularly limited thereto. Thanks to this configuration, for example, when the slightly oxidized copper-coated copper particles are applied to a substrate or the like, surface contact is likely to occur between the surface of the base material or the like and the particles and between the particles, so that voids can be further suppressed while a large sintered area of each particle is secured during sintering. The upper limit of the average second aspect ratio is not particularly limited, and may be 1.00 or less. The average second aspect ratio is obtained, for example, by acquiring an SEM image of slightly oxidized copper-coated copper particles, randomly selecting 10 or more particles from the SEM image, determining the major axis length and the minor axis length, and calculating the second aspect ratio (minor axis length/major axis length) and the arithmetic average value thereof. The SEM image is a secondary electron image (SEI), for example, and is acquired under the imaging conditions specified by an acceleration voltage of 15 kV and a magnification of 5000 times, though the observation conditions are not limited as long as the shape of the core copper particles can be clearly confirmed. The surface SEM image is a secondary electron image (SEI), and is acquired under imaging conditions specified by an acceleration voltage of 15 kV and a magnification of 5000 times.

In the slightly oxidized copper-coated copper particle according to the present embodiments, it is preferable that the upper surface and the lower surface both orthogonal to the thickness direction of the core copper particle are smooth. As a result, when the slightly oxidized copper-coated copper particles are applied to a substrate or the like, for example, surface contact is likely to occur between the surface of the substrate or the like and the particles and between the particles, and voids are suppressed while a large sintered area of each particle is secured during sintering, and as a result, a sintered body having a strong structure is obtained, so that a bonded body having high bonding strength can be obtained. As one of indices of smoothness of particles, the arithmetic average value of fractal dimensions of the particle surface is preferably 1.00 to 1.05. For the arithmetic average value of ratios, for example, an SEM image capturing the thickness direction of slightly oxidized copper-coated copper particles is acquired, 10 or more particles are randomly selected from the SEM image, surface roughness curves of the upper surface and the lower surface both orthogonal to the thickness direction of each particle are created, fractal dimensions are calculated by a box count method using image processing software (ImageJ 1.54g manufactured by NIH), and the arithmetic average value thereof can be obtained. The box sizes used for the fractal dimension calculation are 0.1, 0.2, 0.3, 0.4, 0.5, 0.6, 0.7, 0.8, 0.9, and 1.0 µm on one side. The SEM image is a secondary electron image (SEI), for example, and is acquired under the imaging conditions specified by an acceleration voltage of 15 kV and a magnification of 5000 times, though the observation conditions are not limited as long as the shape of the core copper particles can be clearly confirmed. In addition, as for the surface roughness curves of the upper surface and the lower surface of each particle, each particle with the thickness direction thereof captured whose contour is clear is selected, a contour of the major axis which is orthogonal to the thickness direction and is generated by an edge effect (the contour is a white bright line observed in the secondary electron image) are regarded as the surface roughness curves of the upper surface and the lower surface of the particle, and the surface roughness curves are created. As to the particle with the thickness direction thereof captured, for example, in which, in the SEM observation image of slightly oxidized copper-coated copper particle powder, when the maximum length of each particle is defined as a major axis length and the arithmetic average length of portions orthogonal to the major axis length is defined as a minor axis length, each particle having a ratio of the minor axis length to the major axis length of 0.4 or less, preferably about 0.2 can be used as the particle with the thickness direction thereof captured.

By using the slightly oxidized copper-coated copper particles according to the present embodiments, it is possible to sinter the slightly oxidized copper-coated copper particles sufficiently even at a low temperature of 250°C or lower, more preferably 200°C or lower, under atmospheric pressure (desirably a pressure equal to or higher than the atmospheric pressure).

The present disclosure also includes a material for sintering containing the slightly oxidized copper-coated copper particles according to the present embodiments. Examples of the material for sintering include a paste or ink containing the slightly oxidized copper-coated copper particles according to the present embodiments and being for the purpose of forming a conductive film or the like, for example. As the dispersion medium contained in the paste or ink, a known material can be used. Examples of the known material include 2-(dimethylamino)ethanol, N-butyldiethanolamine, N-methyldiethanolamine, N-ethyldiethanolamine, diethanolamine, triethanolamine, 1-[bis(2-hydroxyethyl)amino]-2-propanol, and ethylenediamine-N,N,N',N'-tetraethanol. By, for example, applying the material for sintering containing the slightly oxidized copper-coated copper particles according to the present embodiments to bonding surfaces of a plurality of materials, for example, metal (pure metal, alloy), ceramics, or the like, and bonding the surfaces, a bonded body having high bonding strength can be obtained. The sintered body according to the present embodiments is formed by sintering a material for sintering containing the slightly oxidized copper-coated copper particles according to the present embodiments. The bonded body according to the present embodiment is formed by bonding a plurality of materials with a material for sintering containing the slightly oxidized copper-coated copper particles according to the present embodiments.

A method for producing the slightly oxidized copper-containing particles according to the present embodiments includes:
processing raw material copper particles such that, in which, in an SEM image, when a maximum length of each particle is defined as a major axis length, an arithmetic average value of the major axis lengths becomes more than 1 µm; and in which, in the SEM image, for particles having a ratio of an arithmetic average length of portions orthogonal to the major axis length to the major axis length of 0.4 or less, the arithmetic average length is defined as a thickness, an arithmetic average value of ratios of the thickness to the major axis length becomes 0.25 or less; and
mixing the raw material copper particles with a solution containing a solvent, an amine compound, and a complexing agent, and then adding a reducing agent to cause a reaction.

In addition, as necessary, the raw material copper particles after the processing and before the reaction may be subjected to an oxidation treatment, or cuprous oxide (Cu₂O) or copper oxide particles (CuO) may be added as a copper oxide source.

By the above method, the slightly oxidized copper-coated copper particles according to the present embodiments are obtained, and in the slightly oxidized copper-coated copper particles, the slightly oxidized copper contained in the shell can be a plurality of particles.

Hereinafter, the conditions of the production method according to the present embodiments will be described in detail.

### [Step of processing raw material copper particles]

In an SEM image, the raw material copper particles are processed such that the arithmetic average value of major axis lengths is more than 1 µm and the arithmetic average value of ratios of the thickness to the major axis length is 0.25 or less (hereinafter, this processing may be "flattening treatment").

As a processing (flattening) method, it is possible to adjust the raw material copper particles to particles having the above-described dimensions (and the average second aspect ratio, the arithmetic average value of fractal dimensions, and the like according to the embodiments of the present invention) by processing the raw material copper particles using a thin-film spin system high-speed mixer. As the thin-film spin system high-speed mixer, FILMIX 56-L manufactured by PRIMIX Corporation or the like can be used, and it is preferable, for obtaining particles having the above dimensions and the like, to perform the processing at a peripheral speed of 5 to 50 m/s for 10 to 60 minutes. As another method, for example, the treatment may be performed with a bead mill or a ball mill. At that time, for example, by selecting a medium having a diameter of about 10 times or more the particle size of the raw material copper particles, particles having the above-described dimensions and the like can be efficiently obtained. The method of the flattening treatment is not limited thereto, and various methods such as a rolling treatment using a three-roll mill can be used.

The method for obtaining the raw material copper particles is not particularly limited, and for example, a commercially available product can also be used. As for the size of the raw material copper particles before processing, in an SEM image, the arithmetic average value of major axis lengths can be more than 1 µm, and preferably 2 µm or more. The shape of the raw material copper particles before processing is not particularly limited, but it is preferable, from the viewpoint of cost, to use, for example, dendrite copper particles produced by an electrolytic method.

### [Oxidation treatment step]

On the surface of the raw material copper particles, a film of copper oxide containing one or more of CuO and Cu₂O (preferably copper oxide consisting of Cu₂O) may exist due to natural oxidation or the like. In the present embodiments, the raw material copper particles may be subjected to an oxidation treatment as necessary so as to have a copper oxide film more than the natural oxide film. Examples of the oxidation treatment method include a method of heating in water and a method of heating in the air.

By performing the oxidation treatment, it is possible, for example, to adjust the proportion accounted for in the raw material copper particles by the copper oxide containing one or more of CuO and Cu₂O to 1% by mass or more. When it is desired to form a thick shell containing slightly oxidized copper consisting of one or both of Cu₆₄O and Cu₈O in the core-shell type slightly oxidized copper-coated copper particles to be finally obtained, it is permitted to actively oxidize the raw material particles. In this case, when the amount accounted for in the raw material particles by the surface copper oxide is excessively large, a shell containing slightly oxidized copper consisting of one or both of Cu₆₄O and Cu₈O is less likely to adhere to the core copper particles. The shell containing slightly oxidized copper consisting of one or both of Cu₆₄O and Cu₈O is to have lower crystallinity when sintered at a low temperature as compared with the core copper particles having high crystallinity, but if the shell is thick, there is a concern about deterioration in mechanical strength and/or electrical conductivity. From these viewpoints, the proportion of the copper oxide containing one or more of CuO and Cu₂O in the raw material particles is preferably 10% by mass or less.

In addition, instead of oxidizing the raw material copper particles, the same effect can be obtained by adding copper oxide particles containing one or more of CuO and Cu₂O, in the reaction step described below. Even in that case, the addition ratio of the copper oxide particles to the raw material copper particles is preferably 10% by mass or less.

### [Reaction step]

The raw material copper particles after the processing (or after the oxidation treatment) are mixed with a solution containing a solvent, an amine compound, and a complexing agent, and then a reducing agent is added, and the resulting mixture is subjected to reaction (synthesis). Instead of the oxidation treatment of the raw material copper particles, copper oxide particles containing one or more of CuO and Cu₂O may be appropriately added. Hereinafter, the complexing agent and the like necessary for the reaction will be described.

### (Complexing agent)

In the present embodiment, the copper oxide contained in the raw material copper particles after the processing (or after the oxidation treatment) or the copper oxide added in the form of particles is allowed to react with a complexing agent to form complex ions of copper. By ionizing copper in the raw material copper particles in this manner, it is possible to significantly increase the rate of reduction by the reducing agent as compared with the reduction of a solid copper oxide. Examples of the complexing agent include carboxylic acids. Examples of the carboxylic acids include formic acid, saturated fatty acids, unsaturated fatty acids, hydroxy acids, aromatic carboxylic acids, and terpene-based carboxylic acids. These may be monocarboxylic acids or dicarboxylic acids. These may be used singly or two or more thereof may be used in combination. The aliphatic monocarboxylic acid may be either linear or branched, and may be either a saturated aliphatic monocarboxylic acid or an unsaturated aliphatic monocarboxylic acid. Examples of the linear saturated aliphatic monocarboxylic acid include acetic acid (2 carbon atoms), propionic acid (3 carbon atoms), butyric acid (4 carbon atoms), valeric acid (5 carbon atoms), caproic acid (6 carbon atoms), enanthic acid (7 carbon atoms), caprylic acid (8 carbon atoms), pelargonic acid (9 carbon atoms), capric acid (10 carbon atoms), lauric acid (12 carbon atoms), myristic acid (14 carbon atoms), palmitic acid (16 carbon atoms), margaric acid (17 carbon atoms), and stearic acid (18 carbon atoms).

The aliphatic dicarboxylic acid may be either linear or branched, and may be either a saturated aliphatic dicarboxylic acid or an unsaturated aliphatic dicarboxylic acid. Aliphatic dicarboxylic acids may be used singly or two or more thereof may be used in combination. Examples of the aliphatic dicarboxylic acid include adipic acid, pimelic acid, suberic acid, azelaic acid, sebacic acid, 1,0-nonane dicarboxylic acid, 1,10-decane dicarboxylic acid, brassylic acid, 1,12-dodecane dicarboxylic acid, 1,13-tridecane dicarboxylic acid, thapsic acid, 1,15-pentadecane dicarboxylic acid, and 1,16-hexadecane dicarboxylic acid. Examples of the aromatic carboxylic acid include benzoic acid, phthalic acid, isophthalic acid, terephthalic acid, hemimellitic acid, trimellitic acid, and trimesic acid. As a terpene-based carboxylic acid, that contained in rosin and the like can be used. Examples thereof include abietic acid, neoabietic acid, parastrinic acid, pimaric acid, isopimaric acid, and desidroabietic acid.

Among them, it is preferable to use acetic acid, which is easy to handle and also easy to treat after the reaction.

The addition amount of the complexing agent to be used for the reaction is not particularly limited, but is preferably 0.05 times or more and 15 times or less in molar ratio with respect to the copper contained in the starting raw material particles from the viewpoint of promoting complex ion formation of copper in order to promote the generation of Cu₆₄O and Cu₈O.

### (Amine compound)

A compound having an amino group (hereinafter referred to as "amine compound") is added as a protective agent. The amine compound also contributes to complex ion formation of copper. The amine compound is not particularly limited, and for example, an alkanolamine, a diamine, an aminocarboxylic acid, and the like are preferably used. Among them, it is more preferable to use an alkanolamine. Examples of the alkanolamine include 2-amino-1-butanol, 1-amino-2-propanol, 2-amino-2-ethyl-1,3-propanediol, 2-amino-2-hydroxymethyl-1,3-propanediol, 1,3-diamino-2-propanol, 1-amino-2-butanol, and 2-aminoethanol.

The addition amount of the amine compound to be used for the reaction is not particularly limited, but from the viewpoint of promoting the generation of Cu₆₄O and Cu₈O, the molar ratio of the amine compound to the copper contained in the raw material particles is preferably 0.1 times or more. The molar ratio may be, for example, 20 times or less.

### (Solvent)

The solvent is not particularly limited, and for example, polyhydric alcohols such as ethylene glycol, lower alcohols such as methanol, ethanol, and 2-propanol, ketones such as acetone, water, and the like can be used.

### (Reducing agent)

The reducing agent is not particularly limited, and for example, hydrazinebased reducing agents such as hydrazine, hydrazine hydrochloride, hydrazine sulfate, and hydrazine hydrate, citric acid, ascorbic acids, and borohydrides such as sodium borohydride can be used. The reducing agent may be added after the raw material including the raw material particles, the complexing agent, the amine compound, and the solvent is added and mixed. After the addition of the reducing agent, it is just required to perform stirring until the formation of the desired slightly oxidized copper is confirmed. In any production method, it is preferable to perform stirring until the reducing agent disappears and sufficiently perform the reaction.

### (Cooling during reaction)

In the production method according to the present embodiments, for example, when hydrazine is used as the reducing agent, heat generation due to addition of the reducing agent, such as decomposition reaction of hydrazine, may occur, and the temperature of the reaction solution may rise. From the viewpoint of inhibiting the temperature rise of the reaction solution and inhibiting Cu₆₄O and Cu₈O once formed from being reduced into metallic copper, it is preferable to provide a temperature control means such as cooling the reaction solution such that the reaction proceeds at 50°C or lower. For example, as shown in Examples described later, it is preferable to add a reducing agent while a reaction vessel is held in a normal temperature water bath.

### (Atmosphere during reaction)

In the production method according to the present embodiments, the atmosphere during the reaction is limited to an oxygen-containing atmosphere, such as air, and constant exposure to the oxygen-containing atmosphere is necessary during the reaction. The case of an inert gas atmosphere such as nitrogen gas or argon gas, or the case of sealing the reaction vessel even in air is unfavorable because the oxide formation reaction into Cu₆₄O or Cu₈O does not proceed, and metal copper particles are formed.

### (Other steps)

The production method of the present embodiments may further include a step other than those described above, and may include, for example, a step of collecting slightly oxidized copper-containing particles by performing, for example, centrifugal separation and/or filtration on a slurry or the like containing particles containing slightly oxidized copper consisting of one or both of Cu₆₄O and Cu₈O obtained by the reduction described above, a subsequent purification step, a drying step, and the like. In the purification step, it is preferable to purify the particles with a washing solvent. The washing solvent is not particularly limited, and for example, organic solvents such as N,N-dimethylacetamide, toluene, and hexane can be used.

The method for producing the slightly oxidized copper-coated copper particles according to the present embodiments has been described above, but there is a possibility that as a result of trial and error, a person skilled in the art who understands desired characteristics of the slightly oxidized copper-coated copper particles according to the present embodiments will find a method for producing the slightly oxidized copper-coated copper particles according to the present embodiment other than the above-described production method.

A method for producing the sintered body according to the present embodiments includes a step of preparing a material for sintering containing the slightly oxidized copper-coated copper particles according to the present embodiments; and a step of sintering the material for sintering. The step of preparing the material for sintering can be performed by appropriately mixing the slightly oxidized copper-coated copper particles according to the present embodiments and a dispersion medium. The dispersion medium is not particularly limited, and a known dispersion medium can be used, and examples thereof include 2-(dimethylamino)ethanol, N-butyldiethanolamine, N-methyldiethanolamine, N-ethyldiethanolamine, diethanolamine, triethanolamine, 1-[bis(2-hydroxyethyl)amino]-2-propanol, and N,N,N',N'-tetrakis(2-hydroxyethyl)ethylenediamine. In the step of sintering the material for sintering, sintering can be performed by a known method. The sintering method is not particularly limited, but for example, sintering can be performed at a low temperature of 250°C or lower, or 200°C or lower, under atmospheric pressure (desirably a pressure equal to or higher than the atmospheric pressure).

The method for producing the bonded body according to the present embodiments includes a step of preparing a material for sintering containing the slightly oxidized copper-coated copper particles according to the present embodiments; and a step of bonding a plurality of materials with the material for sintering. The step of preparing the material for sintering containing the slightly oxidized copper-coated copper particles according to the present embodiments is as described above. The step of bonding the plurality of materials with the material for sintering is not particularly limited, but can be performed by, for example, applying the material for sintering to bonding surfaces of the plurality of materials, such as metal (pure metal, alloy) or ceramics, and bonding the bonding surfaces. As the bonding condition, bonding can be performed by, for example, sintering the material for sintering existing between the plurality of materials at a low temperature of 250°C or lower, or 200°C or lower, under atmospheric pressure (desirably a pressure equal to or higher than the atmospheric pressure).

### EXAMPLES

In the following, the present embodiments will be described more specifically with reference to Examples. The present embodiments are not limited by the following Examples, and can be implemented with appropriate modifications as long as the modifications can be consistent with the above-described and later-described gist, and all of them are included in the scope of the present embodiments.

### (Step of processing raw material copper particles)

Copper particles 07439-01 (particle size provided by the manufacturer: 75 µm to 150 µm, 100 mesh to 200 mesh) manufactured by Kanto Chemical Co., Inc., were used as raw material copper particles. After 70 g of the particles and 60 ml of ethanol (available from Japan Alcohol Trading Co., Ltd.) as a dispersion medium were mixed, processing was intermittently performed for 30 minutes at a peripheral speed of 30 m/s using a thin-film spin system high-speed mixer (FILMIX 56-L manufactured by PRIMIX Corporation). The portion of ethanol volatilized during the processing was appropriately replenished. The supernatant of the resulting solution was removed and the residue was dried, affording raw material copper particles after processing.

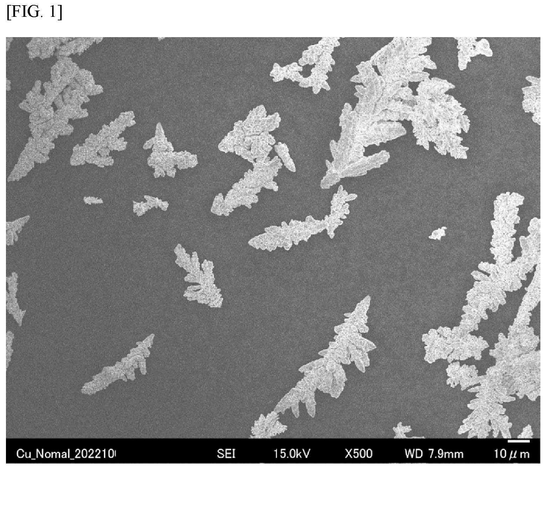

Fig. 1 is an SEM image of the raw material copper particles before processing acquired using a scanning electron microscope (JSM-6701F manufactured by JEOL Ltd.). As shown in Fig. 1, the raw material copper particles before processing were dendrite copper particles having a major axis length of about 10 to 100 µm.

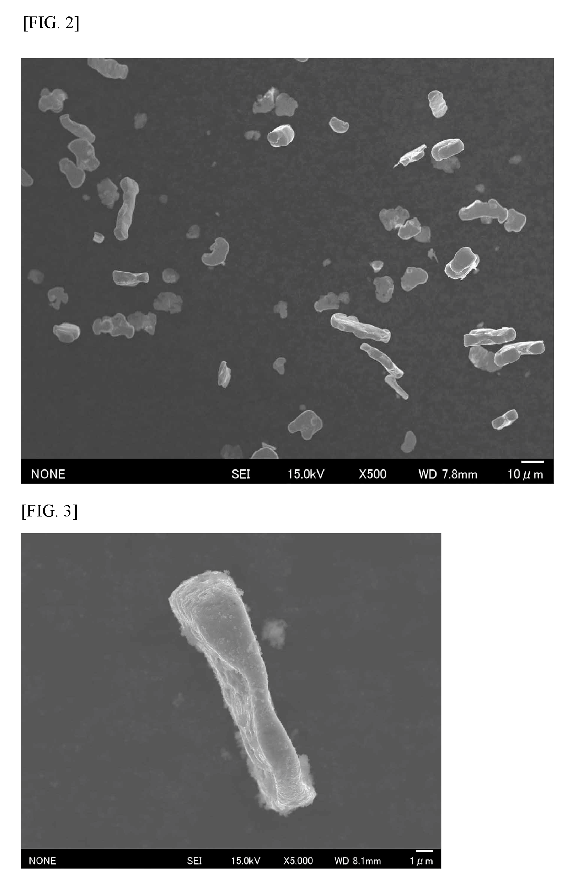

Fig. 2 is an SEM image of the raw material copper particles after processing acquired using the scanning electron microscope. Fig. 3 is one example of an enlarged view of a particle having a ratio of a minor axis length to a major axis length of 0.4 or less in which the maximum length of each particle is defined as the major axis length and the arithmetic average length of portions orthogonal to the major axis length is defined as the minor axis length, and the particle as shown in Fig. 3 was used as a particle with the thickness direction thereof captured for calculation of each of the parameters described later. The SEM image is a secondary electron image (SEI) and was taken at an acceleration voltage of 15 kV. The SEM image in Fig. 2 was captured at a magnification of 500 times and that in Fig. 3 was captured at a magnification of 5000 times. As shown in Fig. 2, it has been found that the raw material copper particles after processing were flattened by processing. A plurality of SEM images as shown in Fig. 3 were acquired, and the arithmetic average value of the major axis lengths, the average first aspect ratio, the average second aspect ratio, and the arithmetic average value of the fractal dimensions were determined by the methods described in detail in "MODE FOR CARRYING OUT THE INVENTION". As a result, the arithmetic average value of the major axis lengths was 18.9 µm, the average first aspect ratio was 0.18, the average second aspect ratio was 0.50, and the arithmetic average value of the fractal dimensions indicating the surface roughness of the particle upper surface was 1.014.

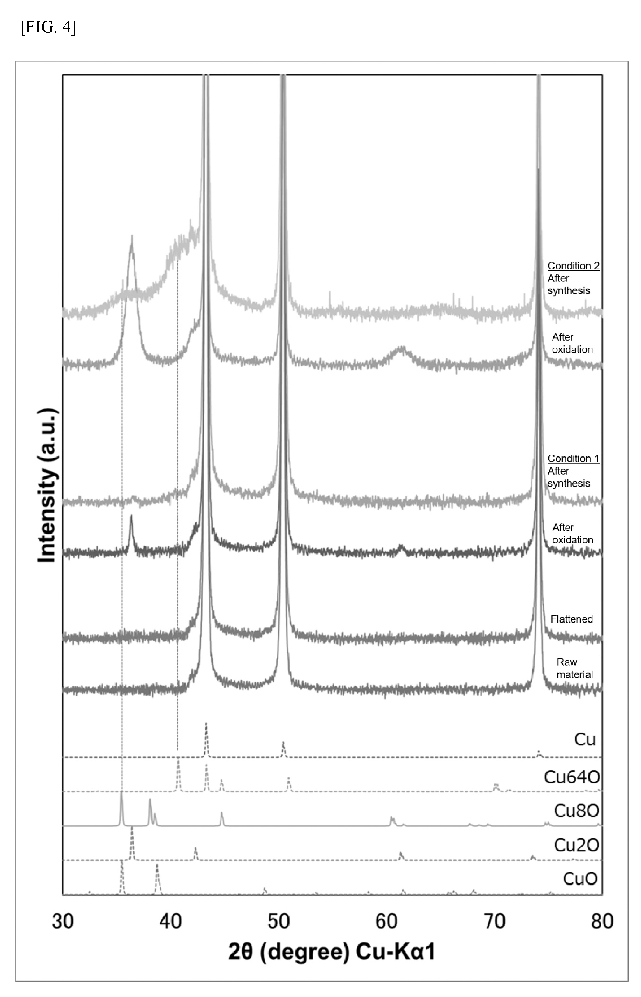

XRD patterns (Fig. 4) were acquired using a powder X-ray diffraction instrument (XRD, MiniFlex II manufactured by Rigaku Corporation, D/teX Ultra) before processing (raw material) and after processing (flattened) of the raw material copper particles. The measurement was performed using a Cu-Kα ray at a scan speed of 20° (20) min⁻¹.

### (Oxidation treatment step)

The raw material copper particles after processing were subjected to an oxidation treatment.

In Condition 1, 114 g of the raw material copper particles after processing were mixed with 1 L of pure water, and the mixture was boiled in the air for 42 hours. The supernatant of the resulting mixed solution was removed and the residue was dried. For the obtained particles, an XRD pattern (Fig. 4: Condition 1, after oxidation) was acquired using a powder X-ray diffraction instrument (XRD, MiniFlex II manufactured by Rigaku Corporation, D/teX Ultra). The measurement was performed using a Cu-Kα ray at a scan speed of 20° (2θ) min⁻¹. As a result of performing RIR quantitative analysis from the XRD pattern, the presence of an oxide film containing 2% by mass of Cu₂O was confirmed.

In Condition 2, 120 g of the raw material copper particles after processing were put in a muffle furnace (FT-101FM manufactured by FULL-TECH CO., LTD.) and heated at 200°C for 2 hours in the air. For the obtained particles, an XRD pattern (Fig. 4, Condition 2, after oxidation) was acquired using the above-mentioned powder X-ray diffraction instrument. The measurement was performed using a Cu-Kα ray at a scan speed of 20° (20) min⁻¹. As a result of performing RIR quantitative analysis from the XRD pattern, the presence of an oxide film containing 5% by mass of Cu₂O was confirmed.

### (Reaction step)

Slightly oxidized copper-coated copper fine particles of Conditions 1 and 2 were synthesized by performing reactions as described below.

A reaction vessel was charged with 1390 g (22.4 mol) of ethylene glycol (manufactured by Kanto Chemical Co., Inc.) as a solvent, 1182 g (15.7 mol) of 1-amino-2-propanol (manufactured by Kanto Chemical Co., Inc.) as a protective agent, and 473 g (7.87 mol) of acetic acid (manufactured by Junsei Chemical Co., Ltd.) as a complexing agent, and the resulting mixture was well stirred, and then 100 g (1.57 mol) of particles subjected to an oxidation treatment of Condition 1 or 2 were added thereto. While the reaction vessel was held in a normal temperature water bath, 788 g (15.7 mol) of hydrazine monohydrate (manufactured by Kanto Chemical Co., Inc.) was added as a reducing agent, and the mixture was allowed to react while being stirred at 1100 rpm. The reaction was conducted in the air. After the reaction, purification by multiple centrifugations using N,N-dimethylacetamide, toluene, and hexane was performed, affording a slurry containing a product. The yield of the slightly oxidized copper-coated copper fine particles in the slurry was calculated by the following formula (1).
[Math 1] $Y = \frac{{M}_{S} - {ρ}_{m} \times {V}_{S}}{1 - \frac{{ρ}_{m}}{{ρ}_{Cu}}}$ (1)

In the formula (1),
Y: Weight (g) of particles in slurry
Mₛ: Weight (g) of slurry
Vₛ: Volume (cm³) of slurry
ρₘ: Density (g/cm³) of solvent
ρ_{Cu}: Density (g/cm³) of copper

### (X-ray diffraction measurement)

X-ray diffraction measurement was performed with a powder X-ray diffraction instrument (XRD, MiniFlex II manufactured by Rigaku Corporation, D/teX Ultra) using the slurry containing the product. The measurement was performed using a Cu-Kα ray at a scan speed of 20° (20) min⁻¹. The result is shown in Fig. 4 (after synthesis).

### (Electron microscope observation)

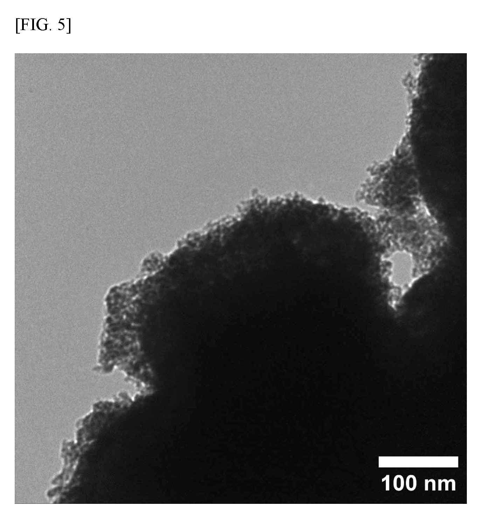

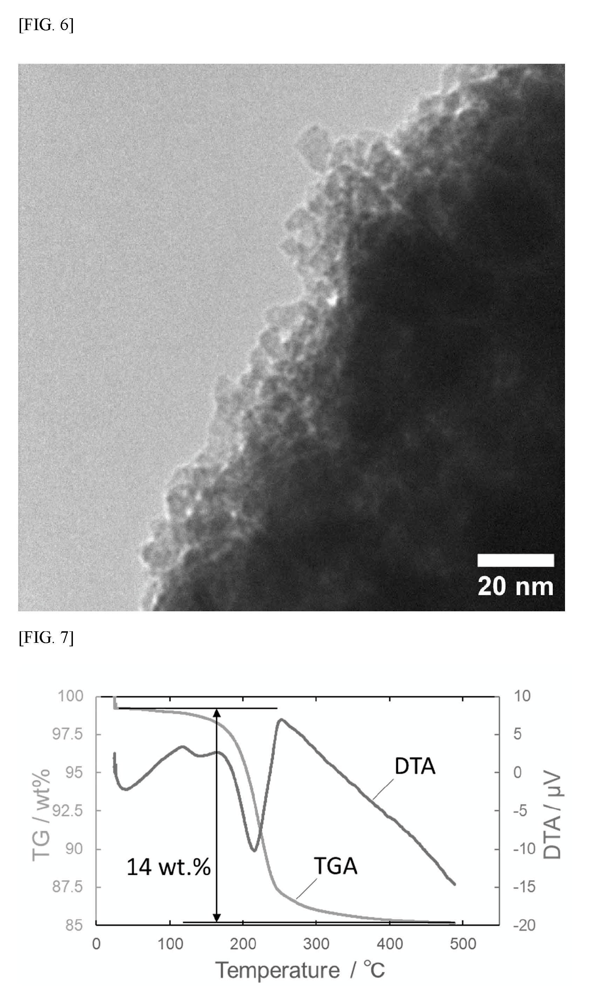

A product obtained by synthesis using the raw material copper particles of Condition 2 was observed with a transmission electron microscope (TEM, JEM-2000FX manufactured by JEOL Ltd., acceleration voltage: 200 kV). The result is shown in Figs. 5 and 6.

From the X-ray diffraction measurement and electron microscope observation, the following has been confirmed. From the XRD pattern (after synthesis) shown in Fig. 4, a peak of Cu₆₄O can be confirmed in both Conditions 1 and 2. In particular, peaks of Cu₆₄O and Cu₈O were clearly confirmed in Condition 2 (5% by mass oxidation).

It has been confirmed from the TEM image shown in Fig. 5 that in the particles of Condition 2, the periphery of a core copper particle is covered with fine particles in a shell form, and it has been confirmed from Fig. 6 in which the shell part is enlarged that the particle size of the nanoparticles constituting the shell was 2 to 10 nm (the arithmetic average value thereof was also within the range). From the XRD pattern (Fig. 3, Condition 2, after synthesis) of the particles, the crystallite sizes measured by the Scherrer method were 3.8 nm for Cu₈O and 2.1 nm for Cu₆₄O, respectively, which were almost consistent with the sizes of the nanoparticles constituting the shell observed by TEM. From the above facts, it is considered that the obtained particles have a configuration in which a nanoparticle shell of Cu₈O and Cu₈O covers the periphery of a core copper fine particle.

### (Production of paste containing slightly oxidized copper-coated copper fine particles)

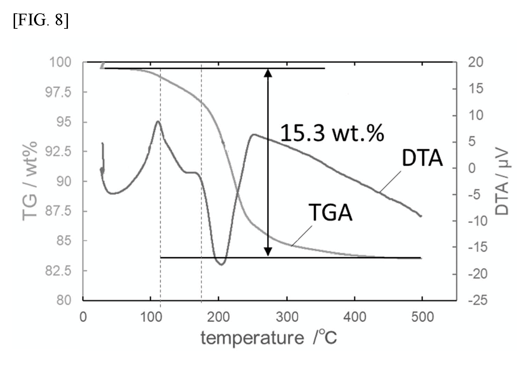

A slurry composed of the synthesized slightly oxidized copper-coated copper fine particles of Conditions 1 and 2 and hexane was subjected to centrifugal separation to remove the supernatant, thereby affording a wet cake of slightly oxidized copper-coated copper fine particles. To 85 parts by mass of the copper particles in the wet cake calculated by the formula (1), 15 parts by mass of triethanolamine (manufactured by FUJIFILM Wako Pure Chemical Corporation) as a paste solvent was added, and a small amount of ethanol for adjusting the solubility of triethanolamine was added, followed by mixing with a vortex mixer (manufactured by Heathrow Scientific). Then, the mixture was stirred for 30 seconds with a planetary centrifugal mixer (AR-100 manufactured by THINKY CORPORATION). Thereafter, ethanol was removed by holding the mixture in normal temperature vacuum until the weight no longer changed, thereby affording a paste of Conditions 1 and 2 (copper die-attach paste). The obtained paste was subjected to thermogravimetric/differential thermal analysis (TG-DTA) at a temperature raising rate of 5°C/min under a 3% hydrogen/nitrogen mixed gas using a TG/DTA simultaneous measuring instrument (manufactured by Shimadzu Corporation). The results are shown in Fig. 7 (Condition 1) and Fig. 8 (Condition 2). As shown in Figs. 7 and 8, as a result, it has been confirmed from the weight loss indicated by TGA that the paste of Condition 1 (2% by mass oxidation) contained 86.0% by mass of slightly oxidized copper-coated copper fine particles and the paste of Condition 2 (5% by mass oxidation) contained 84.7% by mass of slightly oxidized copper-coated copper fine particles.

### (Synthesis of spherical slightly oxidized copper-coated copper fine particles)

As a comparative example, spherical slightly oxidized copper-coated copper fine particles not satisfying the requirements of the present embodiments were synthesized as follows.

733 g (11.8 mol) of ethylene glycol (manufactured by Kanto Chemical Co., Inc.) as a solvent, 591 g (7.87 mol) of 1-amino-2-propanol (manufactured by Kanto Chemical Co., Inc.) as a protective agent, and 236 g (3.93 mol) of acetic acid (manufactured by Junsei Chemical Co., Ltd.) as a complexing agent were placed in a reaction vessel, sufficiently stirred, and then 100 g (1.57 mol) of spherical copper particles (HXR-Cu manufactured by Nippon Atomized Metal Powders Corporation, particle size: 2.5 µm) as a starting material and 2 g (2% by mass based on the copper particles) of cuprous oxide (manufactured by Furukawa Chemicals Co., Ltd.) were added. While the reaction vessel was held in a normal temperature water bath, 394 g (7.87 mol) of hydrazine monohydrate (manufactured by Kanto Chemical Co., Inc.) was added as a reducing agent, and the mixture was allowed to react while being stirred at 1100 rpm. The reaction was conducted in the air. After the reaction, purification by multiple centrifugations using N,N-dimethylacetamide, toluene, and hexane was performed, affording a slurry containing a product.

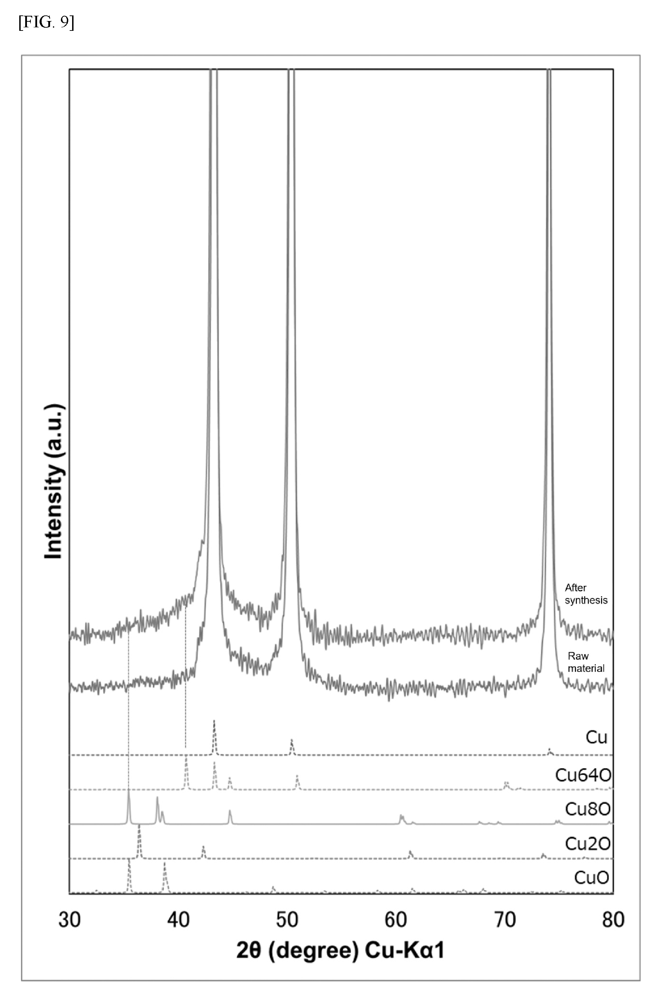

X-ray diffraction measurement was performed with a powder X-ray diffraction instrument (XRD, MiniFlex II manufactured by Rigaku Corporation, D/teX Ultra) using the slurry containing the product. The measurement was performed using a Cu-Kα ray at a scan speed of 20° (20) min⁻¹. The result is shown in Fig. 9 (after synthesis). X-ray diffraction measurement was similarly performed for the spherical copper particles (raw material) as a raw material.

From the XRD pattern shown in Fig. 9, peaks of Cu₆₄O and Cu₈O were confirmed from the synthesized particles.

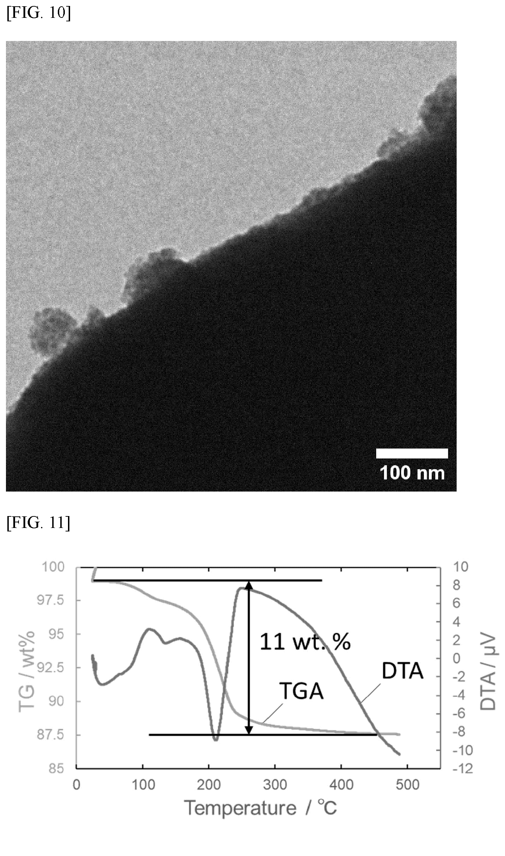

The obtained product was observed with a transmission electron microscope (TEM, JEM-2000FX manufactured by JEOL Ltd., acceleration voltage: 200 kV). One example of a TEM image is shown in Fig. 10.

From the TEM image, it has been confirmed that the periphery of a spherical particle serving as a core was covered with fine particles in a shell form. Since the particles are spherical particles, the average first aspect ratio was estimated to be at least more than 0.25 (not more than 1), and did not satisfy the requirements of the present embodiments.

### (Production of paste containing spherical slightly oxidized copper-coated copper fine particles)

A slurry of the synthesized spherical slightly oxidized copper-coated copper fine particles and hexane was subjected to centrifugal separation to remove the supernatant, thereby affording a wet cake of spherical slightly oxidized copper-coated copper fine particles. To 90 parts by mass of the copper particles in the wet cake calculated by the formula (1), 10 parts by mass of triethanolamine (manufactured by FUJIFILM Wako Pure Chemical Corporation) as a paste solvent was added, and a small amount of ethanol for adjusting the solubility of triethanolamine was added, followed by mixing with a vortex mixer (manufactured by Heathrow Scientific). Then, the mixture was stirred for 30 seconds with a planetary centrifugal mixer (AR-100 manufactured by THINKY CORPORATION). Thereafter, ethanol was removed by holding the mixture in normal temperature vacuum until the weight no longer changed, thereby affording a paste (copper die-attach paste). The obtained paste was subjected to thermogravimetric/differential thermal analysis (TG-DTA) at a temperature raising rate of 5°C/min under a 3% hydrogen/nitrogen mixed gas using a TG/DTA simultaneous measuring instrument (manufactured by Shimadzu Corporation). The result is shown in Fig. 11. As shown in Fig. 11, as a result, it has been confirmed from the weight loss indicated by TGA that the obtained paste contained 89.0% by mass of slightly oxidized copper-coated copper fine particles.

### (Bonding/sintering evaluation)

Two copper test pieces were bonded together using the obtained paste, then a sample for bonding/sintering evaluation bonded through sintering of the paste was prepared, and then bonding strength was measured.

### 1. Preparation of sample for bonding/sintering evaluation

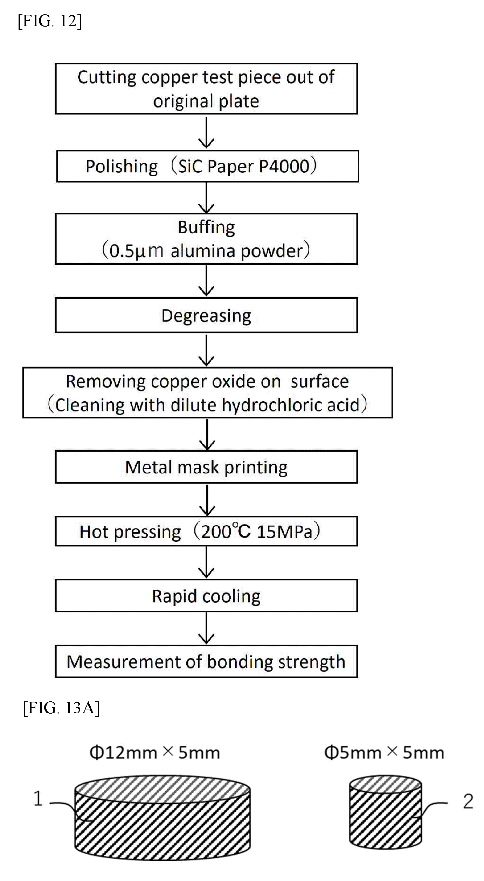

The procedure for preparing the sample for bonding/sintering evaluation is as shown in Fig. 12. First, a copper test piece 1 having a diameter of 12 mm and a copper test piece 2 having a diameter of 5 mm were cut as circular copper test pieces out of an oxygen-free copper plate (C1020P) having a thickness of 5 mm as illustrated in Fig. 13A. As copper test pieces, the copper test piece 1 and the copper test piece 2 were prepared. The surface of each of the copper test pieces was polished with a waterproof grinding and polishing paper (SiC Paper) P4000, then mirror-finished with a polishing cloth soaked with a suspension of 0.5 µm alumina powder, and then degreased, whereby the copper test pieces were finished. Immediately before applying the paste, each copper test piece was immersed in 2.5 M hydrochloric acid to remove a copper oxide film on the surface, sufficiently washed with pure water and methanol, and then dried.

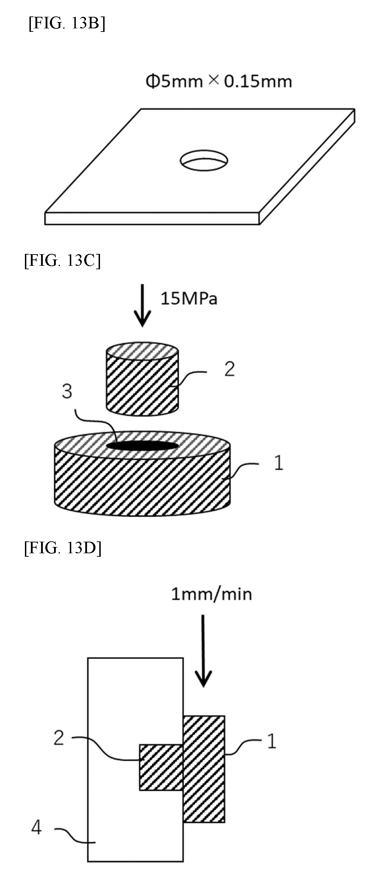

Metal mask printing was then performed. Specifically, a metal mask having an opening size of 5 mm in diameter × 0.15 mm in thickness schematically illustrated in Fig. 13B was used, and as illustrated in Fig. 13C, the paste (the paste containing slightly oxidized copper-coated copper fine particles) 3 was applied to the center of the copper test piece 1 having a diameter of 12 mm, and the copper test piece 1 was placed into contact with the copper test piece 2 having a diameter of 5 mm. Thereafter, with application of a load of 15 MPa to the two copper test pieces placed into contact in the direction of the arrow in Fig. 13C with a hot press, the temperature was raised up to 200°C at a high speed of 90°C/min, and the copper test pieces were held at 200°C for 15 minutes. Thereafter, the copper test pieces were taken out from the hot press, and rapidly cooled by water cooling, affording a sample for bonding/sintering evaluation. A series of operations were performed in a nitrogen atmosphere.

### 2. Bonding/sintering evaluation test (measurement of bonding strength)

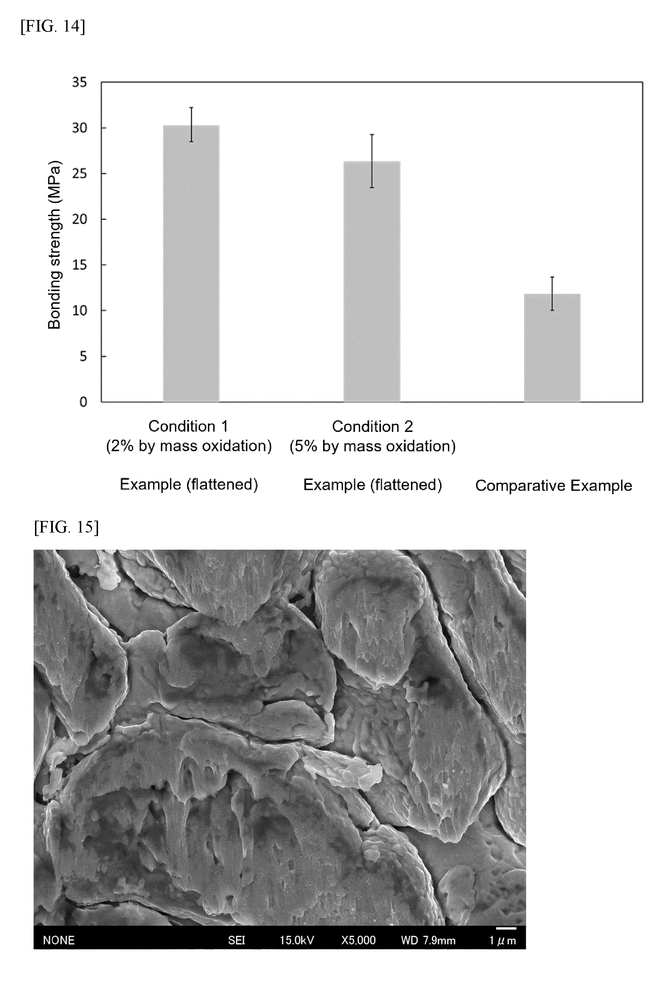

The bonding strength of the sample for bonding/sintering evaluation was evaluated using a 5 kN material testing machine (manufactured by Shimadzu Corporation). Specifically, as illustrated in a schematic sectional view in Fig. 13D, a load was applied to the sample for bonding/sintering evaluation fixed to a fixing jig 4 of the testing machine, in parallel with the coated surface at a speed of 1 mm/min, and the breaking load of the copper test pieces was measured as the bonding strength. The result is shown in Fig. 14. The vertical width indicated for each measured value in Fig. 14 indicates variation in multiple measurements. As shown in Fig. 14, the average bonding strength exhibited was a practically sufficient value, namely, 30.3 MPa for Condition1 (2% by mass oxidation) satisfying the requirements of the present embodiments and 26.4 MPa for Condition 2 (5% by mass oxidation) satisfying the requirements of the present embodiments, whereas the average bonding strength exhibited was a low value of 11.8 MPa in the comparative example, in which the spherical particles not satisfying the requirements of the present embodiments were used.

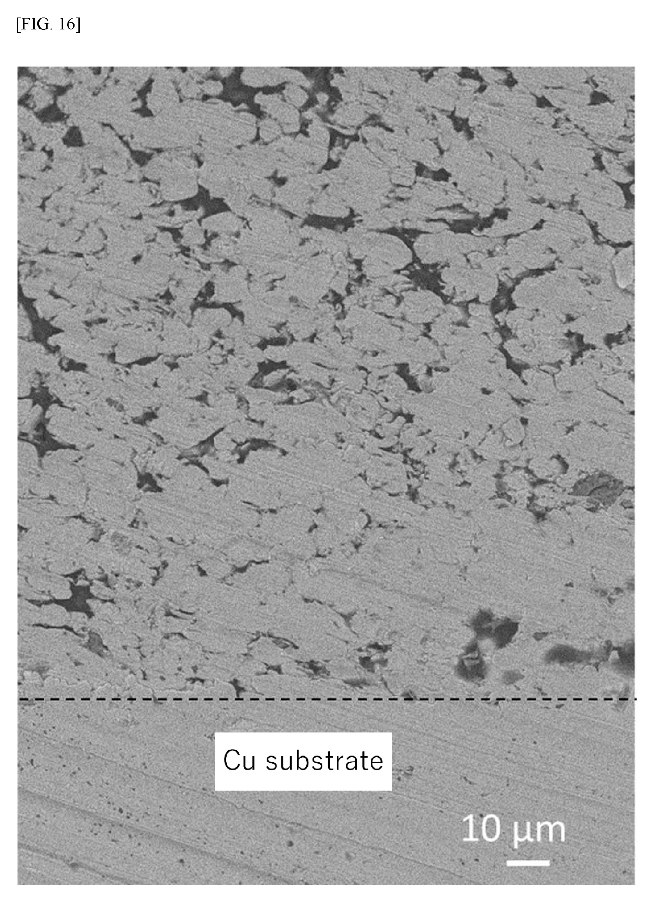

Fig. 15 (Example, Condition 1) shows an SEM image of a fracture surface of the sample for bonding/sintering evaluation after the test. As shown in Fig. 15, in Condition 1 satisfying the requirements of the present embodiments, the sintered body was found to have a trace of being bonded on the entire surface. An SEM image of a cross section of the sample for bonding/sintering evaluation of Condition 1 after the test is shown in Fig. 16. The cross section was prepared by cutting the center of the sample for bonding/sintering evaluation with a low-speed cutter (manufactured by BUEHLER). From the observation image shown in Fig. 16, it is possible to confirm the state of dense sintering in the thickness direction.

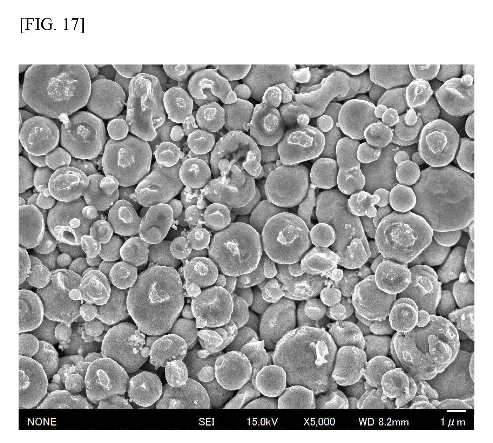

An SEM image of a fracture surface of the sample for bonding/sintering evaluation after the test is shown in Fig. 17 (Comparative Example, spherical particles). As shown in Fig. 17, in the comparative example, in which the spherical particles not satisfying the requirements of the present embodiments were used, a trace of being bonded only at the end points of a spherical particle was found, and as for between particles, as well, a sintered state was observed similarly only at end points.

### INDUSTRIAL APPLICABILITY

The slightly oxidized copper-containing particles according to the present embodiments can be sufficiently sintered even at a low temperature of 250°C or lower, or 200°C or lower, under atmospheric pressure (desirably a pressure equal to or higher than the atmospheric pressure). Therefore, the slightly oxidized copper-containing particles according to the present embodiments can be used, for example, as a material for forming a circuit of a printed board (particularly, flexible substrate) and other fine wiring materials, and further for heat conduction applications as a die bonding material for a power semiconductor described in the Examples above. Further, the slightly oxidized copper-containing particles can also be used as an antistatic material, an electromagnetic wave shielding material, an infrared shielding material, or the like.

This application claims priority based on Japanese Patent Application No. 2024-006167 filed on January 18, 2024. Japanese Patent Application No. 2024-006167 is incorporated herein by reference.

### REFERENCE SIGNS LIST

- 1, 2: Copper test piece
- 3: Paste containing slightly oxidized copper-coated copper fine particles
- 4: Fixing jig of testing machine

## Claims

1. Slightly oxidized copper-coated copper particles each comprising a core copper particle and a shell containing slightly oxidized copper consisting of one or both of Cu₆₄O and Cu₈O,
wherein, in a scanning electron microscope image of the core copper particles, when a maximum length of each particle is defined as a major axis length, an arithmetic average value of the major axis length is more than 1 µm, and
wherein, in the scanning electron microscope image, for particles having a ratio of an arithmetic average length of portions orthogonal to the major axis length to the major axis length of 0.4 or less, when the arithmetic average length is defined as a thickness, an arithmetic average value of ratios of the thickness to the major axis length is 0.25 or less.

2. The slightly oxidized copper-coated copper particles according to claim 1, wherein the slightly oxidized copper is in the form of slightly oxidized copper particles having an arithmetic average value of circle-equivalent diameters of more than 1 nm and 20 nm or less.

3. The slightly oxidized copper-coated copper particles according to claim 1 or 2, wherein in the scanning electron microscope image of the core copper particles, an arithmetic average value of fractal dimensions of particle surface roughness is 1.00 to 1.05.

4. A material for sintering comprising the slightly oxidized copper-coated copper particles according to any one of claims 1 to 3.

5. The material for sintering according to claim 4, wherein the material for sintering is a paste.

6. A sintered body obtained by sintering the material for sintering according to claim 4 or 5.

7. A bonded body obtained by bonding a plurality of materials with the material for sintering according to claim 4 or 5.
